(19) Europäisches Patentamt / European Patent Office / Office européen des brevets

(11) **EP 1 217 384 B1**

(12) **EUROPÄISCHE PATENTSCHRIFT**

(45) Veröffentlichungstag und Bekanntmachung des Hinweises auf die Patenterteilung:
**18.09.2013 Patentblatt 2013/38**

(51) Int Cl.:
***G01S 1/00*** *(2006.01)*

(21) Anmeldenummer: **01129820.5**

(22) Anmeldetag: **14.12.2001**

(54) **Verfahren zur Positionsbestimmung von geostationären Satelliten durch Laufzeitmessungen von Satelliten-Navigationssignalen**

Method of determining the position of geostationary satellites using time-of-flight measurements of satellite navigation signals

Procédé de localisation de satellites géostationaires par mesure de temps de vol de signaux provenant de systèmes de navigation par satellite

(84) Benannte Vertragsstaaten:
**DE FR GB IT**

(30) Priorität: **16.12.2000 DE 10062951**

(43) Veröffentlichungstag der Anmeldung:
**26.06.2002 Patentblatt 2002/26**

(73) Patentinhaber: **Astrium GmbH**
**82024 Taufkirchen (DE)**

(72) Erfinder:
• **Fichter, Walter**
**78464 Konstanz (DE)**
• **Hartrampf, Mark**
**85521 Ottobrunn (DE)**

(74) Vertreter: **Avenhaus, Beate et al**
**EADS Deutschland GmbH**
**Patentabteilung**
**81663 München (DE)**

(56) Entgegenhaltungen:
**WO-A-00/65367     US-A- 6 150 980**

• **MITTNACHT M ET AL: "Real Time On-Board Orbit Determination of GEO Satellites Using Software or Hardaware Correlation" PROC. OF ION GPS-2000, 22. September 2000 (2000-09-22), Seiten 1976-1984, XP002283550 SALT LAKE CITY, USA**
• **KRONMAN J. D.: "Experience Using GPS for Orbit Determination of a Geosynchronous Satellite" PROC. OF ION GPS-2000, 22. September 2000 (2000-09-22), Seiten 1622-1626, XP002283551 SALT LAKE CITY, USA**
• **DAVIS G. W. ET AL: "A Low Cost, High Accuracy Automated GPS-Based Orbit Determination System for Low Earth Satellites" PROC. OF ION GPS-97, 22. September 1997 (1997-09-22), Seiten 723-733, XP002283552 KANSAS CITY, USA**

**Beschreibung**

Die Positionsbestimmung, insbesondere die Bahnbestimmung von geostationären Satelliten erfolgt üblicherweise mit Hilfe von Antennen einer oder mehrerer Bodenstationen. Wird lediglich eine Antenne einer Bodenstation verwendet, so werden zur Positionsbestimmung der Abstand des Satelliten zur Antenne, der Elevationswinkel und der Azimuthwinkel gemessen. Werden zwei oder mehr Bodenstationen verwendet, so werden jeweils Abstandmessungen vom Satelliten zu den Antennen durchgeführt.

Zur Positionsbestimmung, insbesondere zur Bahnbestimmung geostationärer Satelliten können auch Navigationssatelliten verwendet werden. Insbesondere kann das Global Positioning System (GPS) oder das dazu äquivalente GLONASS-System benutzt werden, entweder zusätzlich zu den herkömmlichen Bahnbestimmungsverfahren, oder alternativ dazu. Solche Maßnahmen sind beispielsweise aus DE 199 07 235 sowie aus S. Averin et. al, "On Combined Application of GLONASS and GPS Systems in Conditions of Limited Observability of Navigation Satellites", ION GPS 96, S. 287 ff. bekannt. Die alternative Verwendung von Navigationssatelliten zur Positionsbestimmung führt zu einer Reduktion des nötigen Aufwandes am Boden und somit zu einer Kostenreduktion. Die zusätzliche Verwendung von Navigationssatelliten erhöht die Betriebssicherheit bei der Positionsbestimmung. In jedem Fall ist eine Positionbestimmung mittels Navigationssatelliten relativ einfach zu verwirklichen. Sie erfordert lediglich eine Antenne und einen Empfänger für Signale der Navigationssatelliten an Bord des Satelliten.

Aus M. Mittnacht et al. "Real Time On-board Orbit Determination of GEO Satellites Using Software or Hardware Correlation", ION GPS 2000, S. 1976 ff. ist ebenfalls ein Verfahren zur Positionsbestimmung von geostationären Satelliten bekannt, bei dem Daten über die Laufzeiten von Signalen von dem mindestens einen Navigationssatelliten zu dem geostationären Satelliten sowie Navigationsdaten und Daten über die Systemzeit des mindestens einen Navigationssatelliten durch eine Einrichtung des geostationären Satelliten bestimmt werden und Positionsdaten des geostationären Satelliten aus diesen Daten bestimmt werden.

US- A- 6 140 980 beschreibt ein Verfahren zum Bereitstellen von Zeitinformation an ein benutzerseitiges, kombiniertes Mobilfunk/ Satellitennavigationsgerät durch das Herstellen einer Verbindung zu einem Mobilfunknetz und das Verwenden von Zeitinformation des Mobilfunknetzes zur Positionsbestimmung des benutzerseitigen Satellitennavigationsgeräts.

Navigationssatelliten wie GPS- oder GLONASS-Satelliten fliegen in einer Höhe von etwa 20000 km und strahlen ihre Signale zur Erde hin ab. Geostationäre Satelliten befinden sich in einer Höhe von etwa 36000 km, d.h. über den Bahnen der Navigationssatelliten. Sie können daher nur Signale von Navigationssatelliten empfangen, die sich auf der gegenüberliegenden Seite der Erde befinden und deren Signale an der Erde vorbei strahlen. Diese geometrische Konfiguration führt zu zwei Effekten: Erstens ist der Abstand zwischen dem Navigationssatelliten als Sender und dem geostationären Satelliten als Empfän-ger sehr groß, was eine große Freiraumdämpfung der Signale der Navigationssatelliten zur Folge hat. Zweitens ist Signalstärke der Signale der Navigations-satelliten, die an der Erde vorbeistrahlen, aufgrund der in der Regel vorliegen-den Richtcharakteristik der Sendeantennen der Navigationssatelliten relativ klein. Beide Effekte führen zu einem niedrigen Verhältnis der Signal/Rausch-leistungsdichte (S/N) an der Empfangsantenne des geostationären Satelliten.

Üblicherweise wird zur Behebung der Problematik des geringen S/N-Verhältnisses für den Empfang von Navigationssignalen durch geostationäre Satelliten vorgeschlagen, eine Empfangsantenne mit hoher Direktivität einzusetzen. Dies führt zwar prinzipiell zu einem verbesserten S/N nach der Empfangsantenne. Solche direktiven Antennen sind jedoch relativ gross, schwer und teuer. Vor allem die Grösse ist problematisch, da bei einem geostationären Satelliten die Empfangsantenne für Navigationssignale auf der zur Erde orientierten Seite montiert werden muss und auf dieser Seite bereits eine Vielzahl an Nutzlast-Komponenten und Bus-Komponenten angebracht sind. Es sind daher nur kleine Antennen, z.B. eine hemisphärische Patch Antenne, praktikabel, die jedoch nicht die gewünschte Verbesserung des S/N-Verhältnisses liefern können.

Aufgabe der vorliegenden Erfindung ist es daher, ein Positionsbestimmungsverfahren für geostationäre Satelliten mit Hilfe von Signalen mindestens eines Navigationssatelliten bereit zu stellen, welches insbesondere bei relativ geringen S/N Werten noch effektiv anwendbar ist. Diese Aufgabe wird gelöst durch die Merkmale des Patentanspruchs 1.

Erfahrungsgemäß stellen die unterschiedlichen Teilverfahren, die üblicherwei-se zur Positionsbestimmung mit Hilfe von Navigationssatelliten verwendet werden, unterschiedliche Anforderungen an das S/N-Verhaltnis der empfangenen Signale. So kann eine Laufzeitmessung bzw. Messung von Teilinformationen der Laufzeit ("factional part") noch effektiv bei einem geringeren S/N-Verhältnis durchgeführt werden als die Bestimmung der übrigen Navigationsdaten und von Daten über die Systemzeit, die üblicherweise im Rahmen der von den Navigationssatelliten ausgesandten Signale übertragen werden. Im Rahmen der vorliegenden Erfindung ist nun vorgesehen, nur noch diejenigen Teilverfahren innerhalb des geostationären Satelliten durchzuführen, die mit einem geringen S/N-Verhältnis der empfangenen Signale mindestens eines Navigationssatelliten auskommen, also insbesondere nur noch die Bestimmung von Daten über die Laufzeiten der Signale. Die übrigen Teilverfahren werden mit Hilfe von externen Navigationseinrichtungen durchgeführt, die beispielsweise  auf der Erdoberfläche oder in geeigneter Position relativ zu den Navigationssatelliten auf einem Orbit um die Erde befindlich sein können und für die ein Zugriff auf Navigationsdaten und Daten über die Systemzeit des mindestens einen Navigationssatelliten einfacher möglich ist, als für den geostationären Satelliten. Insbesondere gilt dies für Navigationseinrichtungen, die sich an Orten befinden an denen die Signale der Navigationssatelliten mit einem besseren S/N-Verhältnis empfangen werden können als am Ort des geostationären Satelliten oder für Navigationseinrichtungen, die durch andere Art des Datenzugriffs auf Navigationsdaten und Daten über die Systemzeit des mindestens einen Navigationssatelliten zugreifen können.

Auf Basis eines Datenaustausches zwischen dem geostationären Satelliten und der Navigationseinrichtung kann dann eine Positionsbestimmung für den geostationären Satelliten erfolgen. Durch diese Reduzierung des Teil der Daten, der durch den geostationären Satelliten selbst bestimmt werden muss, auf die reine Bestimmung von Daten über die Laufzeit der Signale kann eine Positionsbestimmung auch bei einem geringen S/N-Verhältnis noch effektiv erfolgen.

In einer ersten Weiterbildung der Erfindung ist vorgesehen, dass ein Empfang von Signalen des mindestens einen Navigationssatelliten durch eine Navigationseinrichtung erfolgt, die mindestens einen Navigationsempfänger aufweist, und durch die Navigationseinrichtung eine Bestimmung von Navigationsdaten und Daten über die Systemzeit des mindestens einen Navigationssatelliten aus den empfangenen Signalen erfolgt. Ein solches Verfahren ist anwendbar für Navigationseinrichtungen, die sich an Orten befinden an denen die Signale der Navigationssatelliten mit einem besseren S/N-Verhältnis empfangen werden können als am Ort des geostationären Satelliten oder für Navigationseinrichtungen. Diese Orte können sich auf der Erde oder auch in einem Orbit um die Erde befinden.

Als alternative Weiterbildung kann vorgesehen werden, dass durch die Navigationseinrichtung eine Abfrage von Navigationsdaten und Daten über die  Systemzeit des mindestens einen Navigationssatelliten in einer Datenbank erfolgt. Hier liegt also der Fall vor, dass durch andere Art des Datenzugriffs auf Navigationsdaten und Daten über die Systemzeit des mindestens einen Navigationssatelliten zugegriffen wird.

Jede der beiden vorgenannten Weiterbildungen führt dazu, dass in der Navigationseinrichtung die Kenntnis über Navigationsdaten und Daten über die Systemzeit des mindestens einen Navigationssatelliten vorliegen, die nun zu einer Positionsbestimmung des geostationären Satelliten herangezogen werden können. Diese Positionsbestimmung kann entweder innerhalb des geostationären Satelliten erfolgen oder sie kann auch innerhalb der Navigationseinrichtung erfolgen.

So kann entweder vorgesehen werden, dass eine Übertragung der Navigationsdaten und der Daten über die Systemzeit an den geostationären Satelliten mit Hilfe einer Sendeeinrichtung erfolgt, die mit der Navigationseinrichtung im Sinne eines Datenaustausches verbunden ist und eine Bestimmung von Positionsdaten des geostationären Satelliten auf Basis der Laufzeitdaten, der Navigationsdaten sowie der Daten über die Systemzeit innerhalb des geostationären Satelliten erfolgt.

Alternativ dazu kann aber auch vorgesehen werden, dass eine Übertragung der Daten über die Laufzeit an die Navigationseinrichtung mit Hilfe einer Sendeeinrichtung des geostationären Satelliten erfolgt, eine Bestimmung von Positionsdaten des geostationären Satelliten auf Basis der Laufzeitdaten, der Navigationsdaten sowie der Daten über die Systemzeit innerhalb der Navigationseinrichtung erfolgt und eine Übertragung der bestimmten Positionsdaten an den geostationären Satelliten mit Hilfe einer Sendeeinrichtung erfolgt, die mit der Navigationseinrichtung im Sinne eines Datenaustausches verbunden ist.

Um eine eindeutige Bestimmung der Laufzeitdaten kann es - je nach Art und Funktionsweise des mindestens einen Navigationssatelliten und der von ihm  übertragenen Signale - notwendig sein, dass eine eindeutige Bestimmung der Laufzeitdaten unter Berücksichtigung einer geschätzten Position des geostationären Satelliten erfolgt. Hierfür sind dann beispielsweise spezielle Schätzeinrichtungen wie Kalman-Filter innerhalb des Satelliten vorzusehen oder es kann auch eine externe Schätzung der Position beispielsweise in einer Bodenstation auf der Erde erfolgen und es können die entsprechenden Daten dann an den Satelliten übermittelt werden.

Die Bestimmung der Laufzeiten kann durch jedes geeignete Verfahren erfolgen, das aus dem Stand der Technik bekannt ist. So kann beispielsweise vorgesehen sein, dass die Daten über die Laufzeiten mit Hilfe eines Delay Lock Loops (DLL) bestimmt werden.

Es kann - je nach System - hilfreich oder gar notwendig sein, dass eine Übertragung von Daten über die Systemzeit von der Navigationseinrichtung an den geostationären Satelliten erfolgt und eine Bestimmung der Laufzeitdaten unter Berücksichtigung der Daten über die Systemzeit erfolgt. Somit kann oder muss in solchen Fällen auch ein entsprechender Datenaustausch zwischen Navigationseinrichtung und Satellit vorgesehen werden.

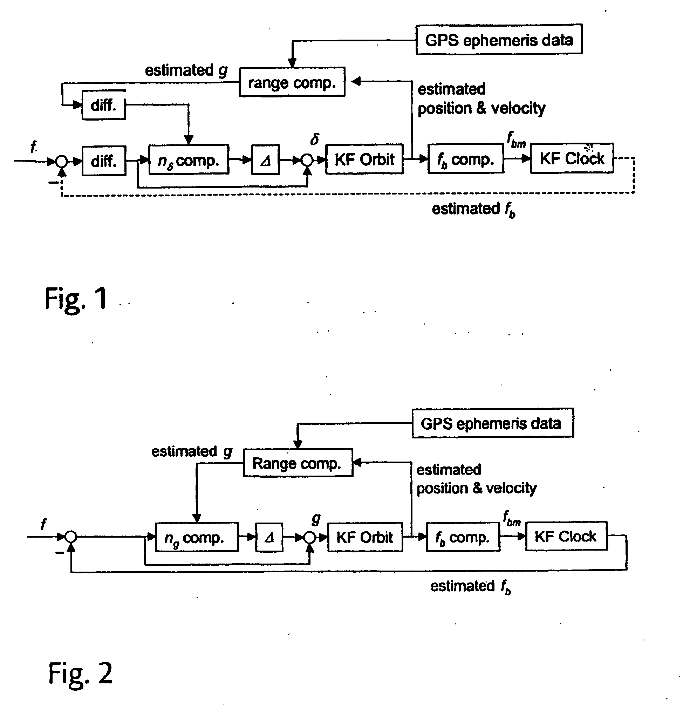

Ein spezielles Ausführungsbeispiel der vorliegenden Erfindung sei nachfolgend anhand der Figuren 1 und 2 erläutert.

Es zeigen:

Fig. 1:    Aufbau eines Schätzfilters zur Positionsbestimmung auf Basis von Differenzen von Laufzeitdaten

Fig. 2:    Aufbau eines Schätzfilters zur Positionsbestimmung auf Basis von Laufzeitdaten

Im folgenden seien kurz die grundlegenden Prinzipien von Navigationsverfahren mit Hilfe von Navigationssatelliten am Beispiel von GPS beschrieben und die hier relevanten Aspekte etwas detaillierter erläutert. Die Erfindung ist jedoch in analoger Weise auch für Navigationsverfahren mit anderen Arten von Navigationssatelliten wie z.B. GLONASS-Satelliten anwendbar. Das Navigationsverfahren dient zur Positionsbestimmung des geostationären Satelliten, wobei hierunter auch die Bestimmung der Satellitenbahn in einem entsprechenden Koordinatensystem zu verstehen ist.

Das typische Navigationssignal von GPS-Satelliten, das L1 C/A Code Signal, besteht aus einem Trägersignal mit ca. 1.5 GHz und zwei "Datentypen", die auf das Trägersignal moduliert sind. Beide "Datentypen" werden zur Navigation benötigt.

- Sogenannte "Navigationsdaten". Sie sind mit 50 Hz auf das Trägersignal moduliert. Die Navigationsdaten werden mit einem sogenannten "Phase Lock Loop" (PLL) dekodiert.

- Pseudorandom Noise (PRN) Sequenzen mit einer Wiederholdauer von 1 msec, entsprechend ungefähr 300 km. Jeder GPS Satellit strahlt eine ihm zugeordnete PRN Sequenz ab. Die einzelnen PRN Sequenzen sind gegenseitig unkorreliert.

Die Navigationsdaten werden bei bisherigen Verfahren aus dem Stand der Technik mit Hilfe eines "Phase Lock Loops" (PLL) im GPS-Empfänger dekodiert. Sie enthalten Informationen über die Position des GPS-Satelliten zur Sendezeit, Zeitmarken der GPS Systemzeit, Uhrenbias des sendenden GPS-Satelliten, Integritätsinformation, etc.

Aus dem PRN-Signal werden mit Hilfe eines "Delay Lock Loops" (DLL) sogenannte Pseudorange-Messungen generiert. Eine Pseudorange-Messung ist eine Laufzeitmessung vom sendenden GPS-Satellit zum GPS-Empfänger, jedoch eventuell behaftet mit einer Ungenauigkeit, die aus dem Uhrenfehler des GPS-Empfängers bezüglich der GPS-Systemzeit (Uhrenbias) resultiert. Der Uhrenbias entsteht also aufgrund einer fehlenden Synchronisation der Empfängeruhr mit der GPS-Systemzeit.

Die eigentliche Messung des Pseuoranges erfolgt durch Phasenmessung, wobei diese wiederum durch Korrelation des Eingangssignales mit einer im Empfänger generierten PRN-Sequenz realisiert wird. Diese Phasenmessung ist allerdings mehrdeutig, da sich die PRN-Sequenz jede Millisekunde wiederholt. Die Mehrdeutigkeit wird mit Hilfe von Zeitmarken, die in den Navigationsdaten enthalten sind, aufgelöst.

Die unbekannten Größen im Rahmen der Positionsberechnung sind also 3 Positionen des Empfängers (in x, y,z - Richtung) sowie der Uhrenbias des Empfängeruhr. Man benötigt also mindestens 4 Laufzeitmessungen zu einem Zeitpunkt um die Position und Zeit instantan bestimmen zu können. Diese Vorgehensweise wird als "kinematische Navigationslösung" bezeichnet.

Sind weniger als 4 Pseudorange-Messungen zu einem Zeitpunkt vorhanden, so muss die Positionsbestimmung beispielsweise mit Hilfe von sequentiellen Schätzverfahren ermittelt werden. Bei diesen Verfahren werden Pseudorange-Messdaten von verschiedenen Zeitpunkten mittels eines Bewegungsmodells für den Empfänger miteinander verknüpft. Solche Schätzverfahren arbeiten in der Regel rekursiv. Das am weitesten verbreitete sequentielle Schätzverfahren ist der sogenannte "Kaiman-Filter". Die Vorgehensweise mit sequentiellen Schätzverfahren wird oft auch als "dynamische Navigationslösung" bezeichnet, da ein dynamisches Bewegungsmodell notwendig ist. Bewegungsmodelle enthalten in der Regel nicht nur Bahnmodelle, sondern auch Modelle der Empfängeruhr, d.h. Modelle für den Uhrenbias und die Uhrendrift.

Im Prinzip können alle oben beschriebenen Navigationverfahren auch "off-line" zum Beispiel in einer separaten Einrichtung wie einer Bodenstation ausgeführt werden. Dazu müssen die anfallenden Rohdaten an die Bodenstation telemetriert werden.

Ein besonderes Verfahren zur "off-line" Navigation wurde unter dem Namen "MicroGPS" bekannt. Hierbei wird der GPS Empfänger an Bord des Satelliten lediglich mehrmals pro Orbit für jeweils einen Bruchteil einer Sekunde eingeschaltet, die Rohdaten (Bit Sequenzen) gespeichert und an eine Bodenstation telemetriert. Aufgrund der kurzen Einschaltzeiten können keine Zeitmarken der GPS-Systemzeit ermittelt werden, da sie Teil der Navigationsdaten sind. Dadurch kann nicht der gesamt Pseudorange bestimmt werden, sondern nur der "fractional part" des Pseudoranges, also der Bruchteil einer PRN-Sequenz, wobei jedoch nicht bestimmt werden kann, welche der sich wiederholenden PRN-Sequenzen erfasst wurde, d.h. die Pseudorange-Messung ist mehrdeutig. Die Mehrdeutigkeit kann in einem solchen Fall lediglich aufgelöst werden durch eine grobe Bestimmung der Position z.B. mit Hilfe von Doppler-Werten.

Im geostationären Orbit sind unter Umständen weniger als 4 GPS-Satelliten für einen geostationären Satelliten sichtbar, d.h. eine kinematische Positionsbestimmung ist in solchen Fällen unmöglich, es muss dann mit Hilfe von sequentiellen Schätzverfahren (üblicherweise Kalman Filter) navigiert werden.

Wie bereits erwähnt ist das S/N-Verhältnis für den Empfang von Signalen von Navigationssatelliten durch geostationäre Satelliten in der Regel relativ klein. Das S/N Verhältnis hat jedoch einen grossen Einfluss auf die fehlerfreie Funktion des PLL und DLL. Für beide Regelkreise muss ein bestimmtes minimales S/N-Verhältnis garantiert sein. Dieser Wert ist für den PLL höher als für den DLL.

Gemäß der vorliegenden Erfindung kann nun auf den PLL innerhalb eines geostationären Satelliten vollständig verzichtet werden und nur mit Hilfe der Rohdaten des DLL navigiert werden. Damit ist für den minimal notwendigen S/N-Wert ein relativ geringer Wert möglich und es kann trotzdem noch eine effektive Positionsbestimmung erfolgen. Ein fehlender PLL hat zunächst folgende technischen Konsequenzen:

- Es stehen keine Navigationsdaten (Ephemerisdaten, Zeitmarken, etc.) mehr innerhalb des geostationären Satelliten zur Verfügung. Die fehlenden Navigationsdaten können jedoch statt durch einen PLL generiert, extern mit Hilfe einer oder mehrerer verteilter Navigationseinrichtungen mit GPS-Empfängern ermittelt werden, oder z.B. durch eine Datenverbindung zu Datenbanken, beispielsweise über Internet, abgefragt werden. Die Navigationsdaten stehen also in den Navigationseinrichtungen, z.B. am Boden, zur Verfügung und können damit gegebenenfalls auch leicht an Bord eines geostationären Satelliten kommandiert werden.

- Es steht nur noch der "fractional part" der Pseudorange-Messung zur Verfügung. Die Messdaten sind also mehrdeutig. Der "integer part" (ganzzahliger Anteil der Pseudorange-Messung, also der Zahl der sich wiederholenden PRN-Sequenzen) kann mit Hilfe einer im geostationären Satelliten vorliegenden, geschätzten Position ermittelt werden. Damit kann dann der gesamte Pseudorange rekonstruiert werden. Bei anderen Systemen, die eine andere Art der Laufzeitmessung vorsehen, kann sich jedoch ergeben, dass eine Kenntnis der geschätzten Position des Satelliten nicht notwendig ist, um die Laufzeitdaten zu bestimmen.

Zur Bestimmung der Positionsdaten aus den Daten, die aus den Signalen des oder der Navigationssatelliten ermittelt wurden, kann zwischen zwei verschiedenen Konfigurationen unterschieden werden:

1. Bahnbestimmung am Boden
Hierbei werden entweder die Rohdaten (Bit Sequenzen) oder vorverarbeitete Daten ("fractional parts" der Pseudoranges) vom Satelliten an den Boden telemetriert, dort verarbeitet und eine Position des geostationären Satelliten bestimmt und die so bestimmten Positionsdaten mittels Telekommando wieder an den Satelliten zurück gesendet. Dies kann, muss aber nicht permanent erfolgen, sondern nur in gewissen Zeitabständen, um beispielsweise ein Bahnmodell für die Position des geostationären Satelliten an Bord des Satelliten zu re-initialisieren.

2. Bahnbestimmung an Bord
In diesem Fall werden die relevanten Navigationsdaten und Daten über die GPS-Systemzeit, die extern ermittelt oder abgefragt wurden, an den Satelliten kommandiert. Die Position des geostationären Satelliten wird dann direkt an Bord des Satelliten bestimmt.

Aufgrund der fehlenden Navigationsdaten und der fehlenden GPS-Systemzeit im geostationären Satelliten wird bei der vorliegenden Erfindung also grundsätzlich eine zusätzliche externe Navigationseinrichtung vorgesehen. Bei einer GPS-Navigationslösung ist es in der Regel erforderlich, dass die GPS-Systemzeit im Empfänger, im vorliegenden Fall also auch im geostationären Satelliten, bekannt ist. Dies kann durch regelmäßige Kalibrierung der GPS-Empfängeruhr im geostationären Satelliten von der externen Navigationseinrichtung aus erfolgen. Bei der Positionbestimmung an Bord müssen die relevanten Navigationsdaten ebenfalls an dem Empfänger telekommandiert werden, wie bereits beschrieben. Beide Aktivitäten stellen allerdings keinen zusätzlichen Aufwand dar, da bei geostationären Satelliten ohnehin ständig ein Datenaustausch, insbesondere mit Bodenstationen, besteht und die Übertragung der notwendigen Daten für die Positionsbestimmung in diesen standardisierten Datenaustausch integriert werden kann.
Im folgenden Abschnitt werden die zur Positionsbestimmung benötigten Algorithmen detailliert beschrieben.
Rekonstruktion von Pseudorange Differenzen:
Eine Pseudorange p setzt sich aus geometrischen Distanz g und Uhrenbias b zusammen und kann durch

$$p = g + b = n\,\Delta + f$$

beschrieben werden. $\Delta$ ist ungefähr 300 km, entsprechend der Wiederholdauer des PRN-Signals. $n$ steht für den ganzzahligen Anteil der Messung, d.h. die Summe der ganzzahligen Anteile der geometrischen Distanz und des Uhrenbias. Entsprechend ist $f$ der "fractional part" beider Anteile. Die eigentliche Messung besteht aus der Bestimmung von $f$, dagegen ist $n$ zunächst unbekannt.
Als Messungen zur Aktualisierung des Kalman-Filters werden Differenzen von Pseudoranges verwendet, um das Uhrenmodell und die damit verbundene relativ große Unsicherheit zu eliminieren. Eine solche Differenzmessung ist bereits aus dem Stand der Technik aus dem eingangs zitierten Aufsatz von S. A-verin et al. bekannt.

Die Differenz zwischen zwei Pseudoranges ist:

$$\delta = p_1 - p_2 = (n_1 - n_2)\,\Delta + (f_1 - f_2) = n_\delta\,\Delta + (f_1 - f_2)$$

Diese neue Messgröße $\delta$ hängt von der Position des geostationären Satelliten ab, ist aber unabhängig vom Uhrenbias. Die $f_1$, $f_2$ sind Messwerte, unbekannt ist hier $n_\delta$. Liegt eine Schätzposition des Satelliten vor, so können die geometrischen Abstände $g_1$, $g_2$ zwischen GPS-Satelliten und geostationärem Satelliten geschätzt werden. Damit kann $n_\delta$ berechnet werden:

$$n_\delta = \text{fix}\,((g_1 - g_2) - (f_1 - f_2),\,\Delta)$$

Die Funktion "fix" rundet auf ganzzahlige Werte, wobei immer in Richtung des Nullpunktes gerundet wird. Zum Beispiel ist fix (- 3.9, 0.5) = -7.

Zur Berechnung der geometrischen Abstände $g_1$, $g_2$ wird neben der Schätzposition des geostationären Satelliten die Position der entsprechenden GPS-Satelliten benötigt. Die Schätzposition des Empfängers erhält man z.B. aus einem einmal initialisierten Kalman-Filter. Die GPS-Satellitenpositionen erhält man mittels der bekannten Ephemerisdaten (Teil der Navigationsdaten) und der Sendezeit der GPS-Signale. Die Sendezeit wird abgeschätzt mit Hilfe der auf GPS-Systemzeit kalibrierten Borduhr und der mittleren Signallaufzeit zwischen GPS-Satellit und geostationärem Satellit, die durch die grobe geometrische Konfiguration gegeben ist.

Man beachte, daß bei der Bestimmung von $n_\delta$ der Wert

$$((g_1 - g_2) - (f_1 - f_2))\,/\,\Delta$$

im idealen Fall eine ganze Zahl ergeben muß.

Im stationären, d.h. eingeschwungenen Zustand des Schätzfilters liegt die Genauigkeit der $g_1$, $g_2$ maximal im Bereich von Kilometern, der Fehler der "fractional parts" $f_1$, $f_2$ im Bereich von Metern. Mit der entsprechenden Genauigkeit kann dann auch der ganzzahlige Wert $n_\delta$ bestimmt werden. Überschreitet oder unterschreitet der Schätzwert $n_\delta$ eine ganze Zahl um mehr als den entsprechenden oben genannten Unsicherheiten, so kann vorgesehen werden, dass dieser Wert als falsch deklariert und die dazugehörige "Messung" $\delta$ nicht zur Aktualisierung des Kalman-Filters verwendet wird.

Im nicht stationären Zustand des Kalman-Filters, zum Beispiel bei sehr ungenauer Initialisierung eines Bahnmodells des geostationären Satelliten, kann es vorkommen, daß die Fehler von $g_1$, $g_2$ entsprechend ungenau werden. Dies könnte zwar prinzipiell dazu führen, daß falsche Werte $n_\delta$ ermittelt werden. Der Kalman-Filter verhält sich bei richtiger Auslegung allerdings robust genug, d.h. die Schätzposition konvergiert trotz dieser Unsicherheiten zum wahren Wert. Dies haben zahlreiche Simulationen bestätigt.

Ist der ganzzahlige Wert $n_\delta$ korrekt bestimmt, so kann die Differenz der Pseudoranges $\delta$ leicht rekonstruiert werden. Mit der Messgröße $\delta$, die nur von Bahndaten, nicht aber von Uhrendaten abhängt, wird dann der Kalman-Filter in üblicher Weise aktualisiert.

Es sei noch darauf hingewiesen, dass zur Anwendung von Pseudorange-Differenzen gleichzeitig die Signale von zwei oder mehr GPS-Satelliten empfangen werden müssen. Dies wird bei dem erfindungsgemäßen Verfahren dadurch erleichtert, daß die S/N Schwelle zum Signalempfang relativ gering ist, was die Sichtbarkeit von GPS-Satelliten erhöht.

Fig. 1 zeigt den prinzipiellen Aufbau eines Schätzfilters, wenn Pseudorange-Differenzen als Meßgrößen verwendet werden. Die GPS Ephemeris Data wird von der externen Navigationseinrichtung geliefert. Die Abkürzung comp. bedeutet jeweils eine Berechnung des entsprechenden Wertes nach den vorgenannten Berechnungsvorschriften, diff. bedeutet eine Differenzbildung der entsprechenden Werte entsprechend den vorgenannten Berechnungsvorschriften.

Die Schätzfilter KF Orbit für Position bzw. Bahn und KF Clock für die Uhr des geostationänren Satelliten sind nicht miteinander verkoppelt. Die durch eine gestrichelte Line angedeutete Rückführung von geschätzten Werten für den Uhrenanteil des "fractional part" $f_b$ ist aufgrund der Differenzenbildung nicht notwendig für diesen Fall. Es soll durch die gestrichelte Linie lediglich angedeutet werden, dass hier dieselbe Struktur vorliegt wie bei der direkten Verwendung von Pseudoranges als Meßgrößen, wie später anhand der Fig. 2 erläutert wird. Der nachgeschaltete Kalman Filter für die Empfängeruhr schätzt nur den "fractional part" der Empfängeruhr, nicht den gesamten Uhrenbias.

Somit ist für diesen Fall die Berechnung von $f_b$ sowie der Kalman Filter KF Clock der Uhr des Satelliten für eine korrekte Funktion des Positionsfilters KF Orbit nicht zwingend notwendig, da als Meßgröße Differenzen von Pseudoranges - und nicht Pseudoranges selbst - verwendet werden. Der Wert des "fractional parts" wird bei n gemessenen GPS-Signalen nach der Vorschrift

$$f_{bm} = \frac{1}{n} \sum_{1}^{n} f_i - f_{gi}$$

ermittelt, wobei die $f_{gi}$ mit Hilfe der Schätzposition des Positionsfilters KF Orbit berechnet werden.

Ist jedoch andererseits nicht ausreichend oft mehr als ein GPS-Satellit gleichzeitig sichtbar, so werden sinnvollerweise Pseudoranges selbst statt Differenzen von Pseudoranges als Messwert zur Aktualisierung des Kalman Filters verwendet werden. Die hierfür nötigen Maßnahmen sind in Fig. 2 dargestellt. Der Aufbau des gesamten Schätzfilters ist im Prinzip identisch mit dem Schätzfilter aus Fig. 1, jedoch fehlen die beiden Differenzenbildungen. Außerdem ist hier die Rückführung des geschätzten "fractional parts" $f_b$ der Uhr obligatorisch, d.h. der Positionsfilter KF Orbit und Uhrenfilter KF Clock sind nicht mehr unabhängig voneinander.

Bei dem Ablauf nach Fig. 2 wird nun der gemessene "fractional part" der Pseudorange f vom Uhrenanteil $f_b$ bereinigt. Es bleibt der "fractional part" der geometrischen Entfernung $f_g$

$$f_g = f - f_b$$

Mit dieser Information wird der geometrische Abstand *g* rekonstruiert, analog zur Vorgehensweise bei Differenzen von Pseudorange-Messungen, nämlich mit Hilfe der geschätzten geometrischen Entfernung *g* (estimated g). Die rekonstruierte geometrische Entfernung wird dann zur Aktualisierung des Positionsfilters KF Orbit verwendet. Somit ist in diesem Fall die Information über $f_b$ notwendig für das Verfahren. Diese erhält man aus dem Uhrenfilter KF Clock, der dem Positionsfilter KF Orbit nachgeschaltet ist. Der Positionsfilter KF Orbit ist daher in diesem Fall nicht mehr unabhängig vom Uhrenfilter KF Clock.

Zusammenfassend zeigt das vorliegende spezielle Beispiel für eine Positionsbestimmung mit GPS somit die Besonderheit, dass nur eine Code Korrelation im Rahmen eines DLL durchgeführt wird, jedoch kein Phasenregelkreis (PLL, Phase Lock Loop) vorgesehen wird. Die Zeit des Satelliten wird regelmäßig auf GPS-Systemzeit kalibriert, die Navigationsdaten und die Daten über die GPS-Systemzeit werden dabei von einer externen Quelle - der externen Navigationseinrichtung - zur Verfügung gestellt. Die eigentlichen Meßdaten bzw. Rohdaten des Verfahrens bestehen aus Sicht des Satelliten nur aus "fractional parts" der Pseudorange-Messungen. Die ganzzahligen Anteile der Pseudorange-Differenzen beziehungsweise Pseudoranges können mit Hilfe der geschätzten Satellitenposition rekonstruiert werden. Die Positionsbestimmung erfolgt mit Hilfe eines Schätzfilters mit den Funktionalitäten eines Kalman-Filters, bestehend aus einem Positionsfilter und einem Uhrenfilter, die jeweils selbst als Kalman-Filter ausgebildet sind. Zur Aktualisierung des Kalman-Fil-ters KF Orbit für die Position werden Differenzen von Pseudorange-Messun-gen verwendet. Eine Kenntnis über den Zustand der Uhr des Satelliten ist hierbei nicht erforderlich. Bei sehr schlechter Sichtbarkeit der Navigationssatelliten können auch rekonstruierte Pseudoranges selbst zur Aktualisierung des Kalman-Filters KF Orbit verwendet werden. Dies erfordert jedoch dann zwingend einen Uhrenfilter KF Clock.

Die Vorteile dieses Verfahrens sind, dass im bordseitigen GPS-Empfänger an Bord des Satelliten kein Phase Lock Loop (PLL) mehr notwendig ist, und aufgrund des nicht mehr nötigen PLL Signale mit niedrigerem S/N-Verhältnis verwendet werden können. Somit können für das Signal-Tracking der relativ schwachen Signalen standardisierte Patch Antennen verwendet werden. Patch Antennen sind relativ klein, leicht und billig. Dies eliminiert das systemtechnische Problem der Unterbringung von großen Empfangsantennen mit Richtcharakteristik auf dem Satelliten.

Die Bestimmung der Position des Satelliten kann entweder innerhalb der externen Navigationseinrichtung, beispielsweise auf der Erde, erfolgen. Rohdaten (Bit Datenstrom) oder vorverarbeitete Daten ("fractional parts") werden dann zu der externen Einrichtung telemetriert. Die Auswertung erfolgt in der externen Einrichtung. Die Positionsdaten (beispielsweise Bahnparameter oder äquivalente Werte) werden zum geostationären Satelliten kommandiert. Es kann aber auch eine Positionsbestimmung an Bord des Satelliten erfolgen. Die Navigationsdaten etc. werden dann zum Satelliten kommandiert. Die Auswertung der Daten erfolgt an Bord des Satelliten im GPS-Empfänger oder in einem anderen Bordrechner. Die Positionsdaten (beispielsweise Bahnparameter oder äquivalente Werte) können zur Kontrolle an die externe Navigationseinrichtung, beispielsweise eine Bodenstation auf der Erde, telemetriert werden.

**Patentansprüche**

1. Verfahren zur Positionsbestimmung von geostationären Satelliten mit Hilfe von Signalen mindestens eines Navigationssatelliten mittels einer dynamischen oder kinematischen Navigationslösung, **gekennzeichnet durch**

   - eine Bestimmung von Laufzeitdaten der Signale von dem mindestens einen Navigationssatelliten zu dem geostationären Satelliten **durch** eine Einrichtung des geostationären Satelliten,
   - eine Bestimmung von Navigationsdaten des mindestens einen Navigationssatelliten **durch** eine von dem mindestens einen Navigationssatelliten sowie von dem geostationären Satelliten unabhängige Navigationseinrichtung,
   - eine Bestimmung von Daten über die Systemzeit des mindestens einen Navigationssatelliten **durch** die von dem mindestens einen Navigationssatelliten sowie von dem geostationären Satelliten unabhängige Navigationseinrichtung,
   - einen Datenaustausch zwischen dem geostationären Satelliten und der Navigationseinrichtung zur Bestimmung von Positionsdaten des geostationären Satelliten aus den Laufzeiten, den Navigationsdaten sowie der Systemzeit des mindestens einen Navigationssatelliten.

2. Verfahren nach Anspruch 1,
   **dadurch gekennzeichnet,**
   **dass** ein Empfang von Signalen des mindestens einen Navigationssatelliten durch die Navigationseinrichtung erfolgt, die mindestens einen Navigationsempfänger aufweist, und durch die Navigationseinrichtung eine Bestimmung von Navigationsdaten und Daten über die Systemzeit des mindestens einen Navigationssatelliten aus den empfangenen Signalen erfolgt.

3. Verfahren nach Anspruch 1,
   **dadurch gekennzeichnet,**
   **dass** durch die Navigationseinrichtung eine Abfrage von Navigationsdaten und Daten über die Systemzeit des mindestens einen Navigationssatelliten in einer Datenbank erfolgt.

4. Verfahren nach einem der Ansprüche 2 bis 3,
   **dadurch gekennzeichnet,**
   **dass** eine Übertragung der Navigationsdaten und der Daten über die Systemzeit an den geostationären Satelliten mit Hilfe einer Sendeeinrichtung erfolgt, die mit der Navigationseinrichtung im Sinne eines Datenaustausches verbunden ist und eine Bestimmung von Positionsdaten des geostationären Satelliten auf Basis der Laufzeitdaten, der Navigationsdaten sowie der Daten über die Systemzeit innerhalb des geostationären Satelliten erfolgt.

5. Verfahren nach einem der Ansprüche 2 bis 3,
   **dadurch gekennzeichnet,**
   **dass** eine Übertragung der Laufzeitdaten an die Navigationseinrichtung mit Hilfe einer Sendeeinrichtung des geostationären Satelliten erfolgt, eine Bestimmung von Positionsdaten des geostationären Satelliten auf Basis der Laufzeitdaten, der Navigationsdaten sowie der Daten über die Systemzeit innerhalb der Navigationseinrichtung erfolgt und eine Übertragung der bestimmten Positionsdaten an den geostationären Satelliten mit Hilfe einer Sendeeinrichtung erfolgt, die mit der Navigationseinrichtung im Sinne eines Datenaustausches verbunden ist.

6. Verfahren nach einem der Ansprüche 1 bis 5,
   **dadurch gekennzeichnet,**
   **dass** eine eindeutige Bestimmung der Laufzeitdaten unter Berücksichtigung einer geschätzten Position des geostationären Satelliten erfolgt.

7. Verfahren nach einem der Ansprüche 1 bis 6,
   **dadurch gekennzeichnet,**
   **dass** die Laufzeitdaten mit Hilfe eines Delay Lock Loops (DLL) bestimmt werden.

8. Verfahren nach einem der Ansprüche 1 bis 7,
   **dadurch gekennzeichnet,**
   **dass** eine Übertragung von Daten über die Systemzeit von der Navigationseinrichtung an den geostationären Satelliten erfolgt und eine Bestimmung der Laufzeitdaten unter Berücksichtigung der Daten über die Systemzeit erfolgt.

**Claims**

1. Method for determining the position of geostationary satellites with the aid of signals of at least one navigation satellite by means of a dynamic or kinematic navigation solution, **characterized by**

   - determining transit times of the signals from the at least one navigation satellite to the geostationary satellite by a device of the geostationary satellite,
   - determining navigation data of the at least one navigation satellite by a navigation device independent of the at least one navigation satellite and of the geostationary satellite,
   - determining data via the system time of the at least one navigation satellite by the navigation device independent of the at least one navigation satellite and of the geostationary satellite, and
   - exchanging data between the geostationary satellite and the navigation device in order to determine position data of the geostationary satellite from the transit times, the navigation data and the system time of the at least one navigation satellite.

2. Method according to Claim 1, **characterized in that** signals of the at least one navigation satellite are received by the navigation device, which has at least one navigation receiver, and the navigation device determines navigation data and data relating to the system time of the at least one navigation satellite from the received signals.

3. Method according to Claim 1, **characterized in that** the navigation device interrogates navigation data and data relating to the system time of the at least one navigation satellite in a database.

4. Method according to either of Claims 2 and 3, **characterized in that** the navigation data and the data relating to the system time at the geostationary satellites are transmitted with the aid of a transmitting device which is connected to the navigation device for the purpose of data exchange, and position data of the geostationary satellite are determined on the basis of the transit time data, the navigation data and the data relating to the system time within the geostationary satellite.

5. Method according to either of Claims 2 and 3, **characterized in that** the transit time data are transmitted to the navigation device with the aid of a transmitting device of the geostationary satellite, position data of the geostationary satellite are determined on the basis of the transit time data, the navigation data and the data relating to the system time within the navigation device, and the determined position data are transmitted to the geostationary satellite with the aid of a transmitting device which is connected to the navigation device for the purpose of data exchange.

6. Method according to one of Claims 1 to 5, **characterized in that** the transit time data are uniquely determined taking account of an estimated position of the geostationary satellite.

7. Method according to one of Claims 1 to 6, **characterized in that** the transit time data are determined with the aid of a delay lock loop (DLL).

8. Method according to one of Claims 1 to 7, **characterized in that** data relating to the system time of the navigation device are transmitted to the geostationary satellite, and the transit time data are determined taking account of the data relating to the system time.

**Revendications**

1. Procédé de détermination de la position de satellites géostationnaires à l'aide de signaux d'au moins un satellite de navigation au moyen d'une résolution dynamique ou cinématique de la navigation, **caractérisé par**

   - une détermination de données de temps de propagation des signaux à partir de l'au moins un satellite de navigation vers le satellite géostationnaire par un dispositif du satellite géostationnaire,
   - une détermination de données de navigation de l'au moins un satellite de navigation par un dispositif de navigation indépendant de l'au moins un satellite de navigation et du satellite géostationnaire,
   - une détermination des données sur le temps système de l'au moins un satellite de navigation par le dispositif de navigation indépendant de l'au moins un satellite de navigation et du satellite géostationnaire,
   - un échange de données entre le satellite géostationnaire et le dispositif de navigation pour déterminer des données de position du satellite géostationnaire à partir des temps de propagation, des données de navigation ainsi que du temps système de l'au moins un satellite de navigation.

2. Procédé selon la revendication 1, **caractérisé en ce qu'**une réception des signaux de l'au moins un satellite de navigation s'effectue par le dispositif de navigation, lequel présente au moins un récepteur de navigation, et une détermination de données de navigation et de données sur le temps système de l'au moins un satellite de navigation est effectuée par le dispositif de navigation à partir des signaux reçus.

3. Procédé selon la revendication 1, **caractérisé en ce qu'**une interrogation de données de navigation et des données sur le temps système de l'au moins un satellite de navigation dans une base de données est effectuée par le dispositif de navigation.

4. Procédé selon l'une des revendications 2 à 3, **caractérisé en ce qu'**une transmission des données de navigation et des données sur le temps système aux satellites géostationnaires est effectuée à l'aide d'un dispositif d'émission, lequel est relié avec le dispositif de navigation dans le sens d'un échange de données et une détermination de données de position du satellite géostationnaire est effectuée à l'intérieur du satellite géostationnaire en se basant sur les données de temps de propagation, les données de navigation ainsi que les données sur le temps système.

5. Procédé selon l'une des revendications 2 à 3, **caractérisé en ce qu'**une transmission des données de temps de propagation au dispositif de navigation est effectuée à l'aide d'un dispositif d'émission du satellite géostationnaire, une détermination de données de position du satellite géostationnaire est effectuée à l'intérieur du dispositif de navigation en se basant sur les données de temps de propagation, les données de navigation ainsi que les données sur le temps système et une transmission des données de position déterminées aux satellites géostationnaires est effectuée à l'aide d'un dispositif d'émission qui est relié avec le dispositif de navigation dans le sens d'un échange de données.

6. Procédé selon l'une des revendications 1 à 5, **caractérisé en ce qu'**une détermination univoque des données de temps de propagation est effectuée en tenant compte d'une position estimée du satellite géostationnaire.

7. Procédé selon l'une des revendications 1 à 6, **caractérisé en ce que** les données de temps de propagation sont déterminées à l'aide d'une boucle à verrouillage de retard (DLL).

8. Procédé selon l'une des revendications 1 à 7, **caractérisé en ce qu'**une transmission de données sur le temps système est effectuée du dispositif de navigation aux satellites géostationnaires et une détermination des données de temps de propagation est effectuée en tenant compte des données sur le temps système.

Fig. 1

Fig. 2

EP 1 217 384 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19907235

- US 6140980 A

**In der Beschreibung aufgeführte Nicht-Patentliteratur**

- **M. MITTNACHT et al.** Real Time On-board Orbit Determination of GEO Satellites Using Software or Hardware Correlation. *ION GPS,* 2000, 1976 ff